# EUROPÄISCHE PATENTSCHRIFT

(11) **EP 3 224 552 B1**
(45) Veröffentlichungstag und Bekanntmachung des Hinweises auf die Patenterteilung: **07.02.2024**
(21) Anmeldenummer: 14805821.7
(22) Anmeldetag: 25.11.2014
(51) Int. Cl.: F25B 27/00, F25D 29/00, H02J 3/14, H02J 7/35, H02J 3/38, H02J 3/46

(54) **KÜHLVORRICHTUNG**
COOLING DEVICE
DISPOSITIF DE REFROIDISSEMENT

(43) Veröffentlichungstag der Anmeldung: 04.10.2017
(73) Patentinhaber: B Medical Systems S.à r.l., 9808 Hosingen (LU)
(72) Erfinder: HOFFMANN, Andreas, 54673 Ammeldingen (DE); GÖDERT, Manuel, B-4780 St Vith (BE)
(74) Vertreter: ARC-IP
(86) Internationale Anmeldenummer: PCT/EP2014/075520
(87) Internationale Veröffentlichungsnummer: WO 2016/082862

(56) Entgegenhaltungen:
- EP-A2- 2 169 331
- BE-A6- 1 018 559
- CN-U- 201 593 895
- US-A- 4 367 633
- US-A- 5 379 596
- US-A1- 2010 101 254
- US-A1- 2012 023 987
- US-A1- 2013 327 077
- US-A1- 2014 265 573
- DATABASE WPI Week 201074 29. September 2010 (2010-09-29) Thomson Scientific, London, GB; AN 2010-N51180 XP002742679, -& CN 201 593 896 U (DROW ENTERPRISE CO LTD) 29. September 2010 (2010-09-29)

## Beschreibung

Die vorliegende Erfindung betrifft eine Kühlvorrichtung, insbesondere eine Kühlvorrichtung in Form einer Kühltruhe, mit einem verschließbaren Kühlraum, einem elektrisch betriebenen Kühlkreislauf und vorzugsweise einem Kältespeicher, wobei der wenigstens eine verschließbare Kühlraum und der Kältespeicher durch den elektrisch betriebenen Kühlkreislauf kühlbar sind. Ferner betrifft die Erfindung ein erstes, ein zweites und ein drittes Verfahren zum Betrieb einer Kühlvorrichtung gemäß der vorliegenden Erfindung.

Unter anderem werden derartige Kühlvorrichtungen, insbesondere Kühltruhen, in abgelegenen Gegenden eingesetzt, insbesondere in Entwicklungsländern, in welchen eine stabile, sichere und kontinuierliche Energieversorgung, beispielweise über ein Stromnetz, nicht gewährleistet werden kann. Nichtsdestotrotz ist gerade in Gebieten, in welchen extreme klimatische Bedingungen vorherrschen, vor allem eine ununterbrochene Kühlkette für die Lagerung empfindlichen Kühlgutes unabdingbar. Als empfindliches Kühlgut kommen dabei unter anderem Nahrungsmittel und insbesondere medizinische Produkte, wie beispielsweise Impfstoff, Blutkonserven oder auch jede andere Art von Blutprodukten infrage. Insbesondere die Lagerung der letztgenannten Produkte im Rahmen der einzuhaltenden Herstellerbedingungen zum Erhalt der Verwendbarkeit und der Wirksamkeit der Produkte, gestaltet sich oft schwierig, was als eine der Ursachen für die überaus schlechten Lebensbedingungen der dort lebenden Menschen gilt und unter anderem zu hohen Sterberaten signifikant beiträgt. Bekannte Kühlvorrichtungen sind in BE1018559A6, US2010/10254A1, CN201593896U und US2012/023987A1 , US2013/327077, EP2169331 A2, US5379596 A, US 2014/265573 A1 offenbart. Bei bekannten Kühlvorrichtungen werden der verschließbare Kühlraum sowie ein gegebenenfalls vorhandener Kältespeicher durch den elektrischen Kühlkreislauf gekühlt solange Strom zur Verfügung steht. Indem die bekannten Kühlvorrichtungen isoliert ausgebildet sind, werden bei einem Ausfall der Energie- bzw. Stromversorgung der verschließbare Kühlraum und somit auch ein im Kühlraum vorhandenes Kühlgut, wie beispielsweise Lebensmittel oder medizinische Produkte, durch die Kühlvorrichtung, vor einer zu starken Erwärmung geschützt.

Darüber hinaus besteht der Bedarf, vor allem in den oben beschriebenen Regionen, in welchen eine stabile, sichere und kontinuierliche Energieversorgung nicht gewährleistet werden kann, auch andere elektrische Geräte, beispielsweise elektrisch betriebene Lampen, Mobiltelefone, Computer, medizinische Geräte oder ähnliches zu betreiben, solange eine Energieversorgung gegeben ist. Bekanntermaßen bewirkt dabei der oftmals gleichzeitige Betrieb einer Mehrzahl von Verbrauchern, dass der Bedarf an elektrischer Leistung stark ansteigt und somit die Kapazität der vorhandenen Energieversorgung übersteigt, sodass die Versorgung der vorhandenen Kühlvorrichtung mit elektrischem Strom nicht mehr sichergestellt ist.

Um dies zu vermeiden, ist es bekannt auf eine Zwischenspeicherung von Strom mit Hilfe von Akkumulatoren zurückzugreifen, wobei die Akkumulatoren in dem Zeitraum, in dem Energie zur Verfügung steht, kontinuierlich aufgeladen werden. Aufgrund ihrer Kapazität, elektrische Energie zu speichern, puffern die Akkumulatoren Lastspitzen, welche beim Einschalten zahlreicher elektrischer Verbraucher entstehen, dahingehend ab, dass der Akkumulator entladen wird, solange der Bedarf an elektrischer Leistung höher ist als der, welcher über die Energieversorgung zur Verfügung gestellt werden kann.

Diese Systeme haben sich zwar in langjährigen Feldtests als äußerst praktikabel herausgestellt.

Allerdings müssen für den sicheren Betrieb einer Kühlvorrichtung die zusätzlichen Akkumulatoren mitgeführt werden. Nachteile ergeben sich hier einerseits aus dem hohen Gewicht der Akkumulatoren beim Transport der Kühlvorrichtung an ihren Einsatzort. Zudem hat es sich als problematisch erwiesen, dass die Akkumulatoren zur Sicherstellung der Energieversorgung der Kühlvorrichtung eine begrenzte Lebensdauer haben. Deren Erneuerung und Entsorgung verursacht hohe Kosten und einen erheblichen Aufwand. Ferner führt eine unsachgemäße Entsorgung von Akkumulatoren zu Gefahren für die Gesundheut und die Umwelt.

Somit ist es Aufgabe der vorliegenden Erfindung, eine Kühlvorrichtung aufzuzeigen, welche die gewünschte Kühlfunktion sicherstellt und zudem den Betrieb von zusätzlichen Verbrauchern ermöglicht, wobei ein sicherer und zuverlässiger Betrieb der Kühlvorrichtung, insbesondere unter widrigen Bedingungen, keine Beeinträchtigung erfolgt, das heißt, dass der Kühlraum sowie das im Kühlraum befindliche Kühlgut zuverlässig in dem gewünschten Temperaturbereich gelagert und gleichzeitig die Versorgung von wenigstens einem weiteren elektrischen Gerät mit Strom ermöglicht wird..

Die Lösung dieser Aufgabe gelingt mit einer Kühlvorrichtung gemäß Anspruch 1 sowie einem Verfahren zum Betrieb einer Kühlvorrichtung gemäß Anspruch 11, Anspruch 12 oder Anspruch 13. Vorteilhafte Weiterbildungen sowohl der Kühlvorrichtung als auch der Verfahren zum Betrieb derselben werden in den Unteransprüchen beschrieben.

Die erfindungsgemäße Kühlvorrichtung zeichnet sich gegenüber den aus dem Stand der Technik bekannten Kühlvorrichtungen dadurch aus, dass die Kühlvorrichtung einen Stromverteiler zur Verteilung von elektrischer Leistung von wenigstens einer regenerativen Stromquelle an den elektrisch betriebenen Kühlkreislauf der Kühlvorrichtung und an wenigstens einen weiteren Verbraucher aufweist und der Stromverteiler wenigstens einen Leistungseingang, einen ersten Leistungsausgang und wenigstens einen zweiten Leistungsausgang aufweist, wobei der wenigstens eine Leistungseingang mit der wenigstens einen regenerativen Stromquelle verbunden werden kann und der erste Leistungsausgang als Kühlvorrichtungsanschluss zum Anschluss des elektrisch betriebenen Kühlkreislaufs der Kühlvorrichtung ausgebildet ist und der wenigstens eine zweite Leistungsausgang als Verbraucheranschluss zum Anschluss des wenigstens einen weiteren elektrischen Verbrauchers ausgebildet ist. Zudem weist der Stromverteiler eine Regelung mit einem Speicher, einer Recheneinheit und einer Vorranglogik auf, wobei die Vorranglogik bei einem Mangel an elektrischer Leistung der wenigstens einen regenerativen Stromquelle den elektrisch betriebenen Kühlkreislauf der Kühlvorrichtung bevorzugt mit Strom versorgt.

Bei der erfindungsgemäßen Kühlvorrichtung wird auf einen zusätzlichen Akkumulator zur Pufferung von Lastspitzen verzichtet, ohne die Versorgungssicherheit der Kühlvorrichtung mit ausreichend elektrischer Leistung zu verringern. Erfindungsgemäß gelingt dies durch die bevorzugte Versorgung des elektrisch betriebenen Kühlkreislaufs der Kühlvorrichtung mit Strom. Dies kann dabei durch die Regelung des Stromverteilers aufgrund dessen Vorranglogik selbstständig und ohne einen manuellen Eingriff des Bedienpersonals am Stromverteiler erfolgen. Die erfindungsgemäße Kühlvorrichtung stellt zudem sicher, dass die erzeugte elektrische Leistung der wenigstens einen regenerativen Stromquelle effektiv genutzt wird, da die Kühlvorrichtung nur bei einem Mangel an elektrischer Leistung der wenigstens einen regenerativen Stromquelle bevorzugt wird.

Die Verbindung zwischen der wenigstens einen regenerativen Stromquelle, dem Stromverteiler, dem elektrisch betriebenen Kühlkreislauf und dem wenigstens einen weiteren elektrischen Verbraucher erfolgt vorzugsweise über eine stromleitende Kabelverbindung. Insbesondere die Verbindung zwischen dem wenigstens einen weiteren Verbraucher und dem Stromverteiler kann aber auch kabellos erfolgen. Ist der Stromverteiler getrennt von dem Gehäuse der Kühlvorrichtung angeordnet, ist die Ausbildung des Kühlvorrichtungsanschlusses als Steckverbindung sinnvoll, ebenso wie die des Verbraucheranschlusses und des Leistungseingangs am Stromverteiler. Hierdurch kann der wenigstens eine weitere elektrischen Verbraucher und die wenigstens eine regenerative Stromquelle einfach mit dem Stromverteiler verbunden werden. Weiter lässt sich auch der Stromverteiler der Kühlvorrichtung leicht austauschen. Ist der Stromverteiler hingegen in dem Gehäuse der Kühlvorrichtung integriert angeordnet, so kann auf die Ausführung des Kühlvorrichtungsanschlusses als Steckverbindung verzichtet werden.

In einer bevorzugten Ausführungsform der Kühlvorrichtung ist die wenigstens eine regenerative Stromquelle ein Solarkollektor oder ein windgetriebener Generator. Die Ausbildung des regenerativen Generators als Solarkollektor oder als windgetriebener Generator hat den Vorteil, dass der Betrieb der Kühlvorrichtung sowie deren elektrisch betriebener Kühlkreislauf einerseits unabhängig von der Verfügbarkeit eines lokalen Stromnetzes erfolgen können. Andererseits sind Solargeräte bzw. windgetriebene Generatoren verhältnismäßig einfach in abgelegene Gebiete zu transportieren und zu installieren. Da zudem in dem bevorzugten Einsatzgebiet der Kühlvorrichtung, insbesondere in Entwicklungsländern, häufig regelmäßige und langfristige Sonneneinstrahlung vorherrscht, bzw. ausreichend Wind weht, sind Solarkollektoren bzw. windgetriebene Generatoren besonders geeignet für den Einsatz als regenerative Stromquelle.

In einer vorteilhaften Weiterbildung der Kühlvorrichtung verfügt der Stromverteiler über wenigstens einen ersten Sensor zur Bestimmung der Leistungsaufnahme des elektrisch betriebenen Kühlkreislaufs der Kühlvorrichtung. Hierdurch lässt sich besonders effektiv ermitteln, ob der Kühlkreislauf der Kühlvorrichtung ausreichend mit Strom versorgt wird oder Schwankungen in der Stromversorgung der Kühlvorrichtung vorherrschen. Der erste Sensor kann dabei entweder die Leistungsaufnahme des elektrisch betriebenen Kühlkreislaufs der Kühlvorrichtung direkt bestimmen oder indirekt. Bei der indirekten Ermittlung der Leistungsaufnahme werden von dem Sensor weitere elektrische Kennwerte, beispielsweise die an der Kühlvorrichtung anliegende Versorgungsspannung und/oder der Stromfluss gemessen. Wird eine mangelhafte Versorgung des elektrisch betriebenen Kühlkreislaufs der Kühlvorrichtung festgestellt, erfolgt durch die Regelung des Stromverteilers mit der Vorranglogik eine bevorzugte Versorgung des elektrisch betriebenen Kühlkreislaufs mit Strom gegenüber anderen Verbrauchern. Unter der Leistungsaufnahme des elektrisch betriebenen Kühlkreislaufs der Kühlvorrichtung ist im Rahmen der Anmeldung auch die Leistungsaufnahme der gesamten Kühlvorrichtung zu verstehen, d.h. der Leistung, welche die Kühlvorrichtung für die Aufrechterhaltung der Kühlfunktion aufnimmt.

In einer Weiterbildung der Kühlvorrichtung weist der Stromverteiler wenigstens einen zweiten Sensor zur Bestimmung der Dichte von verfügbarer Energie auf. Dieser erlaubt eine Vorhersage, wieviel elektrische Leistung die wenigstens eine regenerative Stromquelle liefert und ob dies ausreicht, um neben dem elektrisch betriebenen Kühlkreislauf der Kühlvorrichtung auch den wenigstens einen weiteren elektrischen Verbraucher ausreichend mit Strom zu versorgen. Unter der Dichte der verfügbaren Energie wird dabei die Energiemenge verstanden, welche auf die wenigstens eine regenerative Stromquelle einwirkt. Im Falle eines Solarkollektors ist dies beispielsweise die Intensität der einwirkenden Sonnenstrahlung auf den Solarkollektor. Diese kann beispielsweise mit Hilfe einer Fotozelle bestimmt werden. Wird als wenigstens eine regenerative Stromquelle ein windgetriebener Generator verwendet, ist unter der Dichte der verfügbaren Energie die Stärke des Windes zu verstehen, welche über beispielsweise einen Windmesser ermittelt werden kann. Der zweite Sensor ist bevorzugt derart angeordnet, dass er der auf die wenigstens eine regenerative Stromquelle einwirkenden Energie möglichst direkt ausgesetzt ist, um exakte Messwerte zu erzielen. Beispielsweise ist es sinnvoll den zweiten Sensor mit einer Verkabelung mit dem Stromverteiler zu verbinden und den zweiten Sensor möglichst nahe an der wenigstens eine regenerative Stromquelle zu positionierten.

In einer vorteilhaften Weiterbildung der Kühlvorrichtung trennt der Stromverteiler den wenigstens einen weiteren elektrischen Verbraucher von der wenigstens einen regenerativen Stromquelle, sobald die produzierte elektrische Leistung der wenigstens einen regenerativen Stromquelle die Leistungsaufnahme der Kühlvorrichtung und des wenigstens einen weiteren elektrischen Verbrauchers unterschreitet. Durch ein Trennen des wenigstens einen weiteren elektrischen Verbrauchers von der wenigstens einen regenerativen Stromquelle lässt sich besonders einfach der elektrisch betriebene Kühlkreislauf bevorzugt mit Strom versorgen. Hierdurch wird die Kühlung des verschließbaren Kühlraumes auch bei einer sinkenden elektrischen Leistung der wenigstens einen regenerativen Stromquelle nicht durch andere Verbraucher negativ beeinflusst. Das Trennen des wenigstens einen weiteren elektrischen Verbrauchers von der wenigstens einen regenerativen Stromquelle kann beispielsweise dadurch erfolgen, dass der wenigstens eine zweite Leistungsausgang stromlos geschaltet wird.

In einer bevorzugten Weiterbildung der Kühlvorrichtung verbindet der Stromverteiler den wenigstens einen weiteren elektrischen Verbraucher mit der wenigstens einen regenerativen Stromquelle, sobald die produzierte elektrische Leistung der wenigstens einen regenerativen Stromquelle die Leistungsaufnahme des elektrisch betriebenen Kühlkreislaufs der Kühlvorrichtung und des wenigstens einen weiteren elektrischen Verbrauchers überschreitet. Hierdurch wird sichergestellt, dass die von der wenigstens einen regenerativen Stromquelle erzeugte elektrische Leistung nicht ungenutzt verloren geht. Das Verbinden des wenigstens einen elektrischen Verbrauchers mit der wenigstens einen regenerativen Stromquelle kann dadurch erfolgen, dass der wenigstens eine zweite Leistungsausgang durch die Regelung des Stromverteilers unter Strom gesetzt wird.

Für den Betrieb der Kühlvorrichtung ist es vorteilhaft, dass bei einem Betrieb einer Mehrzahl von weiteren elektrischen Verbrauchern der Stromverteiler das Trennen oder Verbinden mit der wenigstens einen regenerativen Stromquelle in Abhängigkeit der Leistungsaufnahme des jeweiligen weiteren elektrischen Verbrauchers durchführt. Hierdurch wird eine verbesserte Nutzung der überschüssigen Energie erreicht, welche für den Betrieb des elektrisch betriebenen Kühlkreislaufs nicht benötigt wird. Dabei ist es auch denkbar, dass die Regelung des Stromverteilers die Mehrzahl von weiteren elektrischen Verbrauchern entweder einzeln oder in Gruppen mit der wenigstens einen regenerativen Stromquelle verbindet bzw. von dieser trennt, je nachdem wieviel elektrische Energie zur Verfügung steht, die von dem elektrisch betriebenen Kühlkreislauf nicht benötigt wird. Das Einteilen der Mehrzahl von weiteren elektrischen Verbrauchern in Gruppen kann durch die Regelung des Stromverteilers erfolgen, sodass die Summe der von der Mehrzahl der weiteren elektrischen Verbrauchern benötigten elektrischen Leistung möglichst der nicht genutzten elektrischen Leistung der wenigstens einen regenerativen Stromquelle entspricht.

In einer vorteilhaften Weiterbildung der Kühlvorrichtung versorgt der Stromverteiler den wenigstens einen elektrischen Verbraucher mit Strom, wenn der elektrisch betriebene Kühlkreislauf der Kühlvorrichtung keine elektrische Leistung aufnimmt. Dies bietet den Vorteil, dass die für die Versorgung des elektrisch betriebenen Kühlkreislaufs erforderliche wenigstens eine regenerative Stromquelle mit einer niedrigeren elektrischen Leistung und somit kompakter und preiswerter geplant werden kann. Da der elektrisch betriebene Kühlkreislauf der Kühlvorrichtung vorzugsweise dann arbeitet, also den wenigstens einen Kühlraum kühlt, wenn die Temperatur im wenigstens einen verschließbaren Kühlraum über die für die Lagerung des Kühlgutes gewünschten Temperaturbereichs zu übersteigen droht, bedeutet dies, dass der elektrisch betriebene Kühlkreislauf keinen elektrischen Strom benötigt, sofern die Temperatur im wenigstens einen verschließbaren Kühlraum einem gewünschten Temperaturbereich entspricht. Die dann überschüssige elektrische Leistung der wenigstens einen regenerativen Stromquelle kann für den Zeitraum, in welchem der elektrisch betriebene Kühlkreislauf nicht in Betrieb ist, zusätzlich dem wenigstens einen weiteren elektrischen Verbraucher zugeführt werden.

In einer bevorzugten Ausführung der Kühlvorrichtung ist der Verbraucheranschluss als Ladevorrichtung für einen akkubetriebenen elektrischen Verbraucher, insbesondere eine Lampe und/oder ein Mobiltelefon und/oder einen Computer ausgebildet. Es sind jedoch auch alle anderen Arten von elektrisch betriebenen Verbrauchern denkbar, wie beispielsweise medizinische Geräte. Durch den Anschluss eines akkubetriebenen elektrischen Verbrauchers an den Verbraucheranschluss kann die überschüssige elektrische Leistung der wenigstens einen regenerativen Stromquelle in dem Akku des akkubetriebenen elektrischen Verbrauchers gespeichert werden. Somit steht beispielsweise auch nachts ausreichend Licht zur Verfügung, um auch in einem abgelegenen Gebiet Patienten mit den in einer erfindungsgemäßen Kühlvorrichtung gelagerten medizinischen Produkten zu behandeln oder über Kommunikationseinrichtungen, wie den Computer bzw. das Telefon, medizinischen Rat oder Hilfe einzuholen, ohne für die Versorgung des akkubetriebenen elektrischen Verbrauchers eine zusätzliche regenerative Stromquelle vorsehen zu müssen.

Ein erstes erfindungsgemäßes Verfahren zum Betrieb einer erfindungsgemäßen Kühlvorrichtung umfasst folgende Verfahrensschritte:
a) Eine erste Bestimmung der Leistungsaufnahme des elektrisch betriebenen Kühlkreislaufs der Kühlvorrichtung durch den ersten Sensor vor dem Verbinden des wenigstens einen weiteren elektrischen Verbrauchers mit der wenigstens einen regenerativen Stromquelle;
b) Speichern der ersten Bestimmung im Speicher der Regelung;
c) Verbinden des wenigstens einen weiteren elektrischen Verbrauchers mit der wenigstens einen regenerativen Stromquelle;
d) Eine zweite Bestimmung der Leistungsaufnahme des elektrisch betriebenen Kühlkreislaufs der Kühlvorrichtung durch den ersten Sensor nach dem Verbinden des wenigstens einen weiteren elektrischen Verbrauchers mit der wenigstens einen regenerativen Stromquelle;
e) Vergleich der ersten Bestimmung mit der zweiten Bestimmung in der Recheneinheit;
f) Trennen des wenigstens einen weiteren elektrischen Verbrauchers von der wenigstens einen regenerativen Stromquelle, wenn die Leistungsaufnahme der zweiten Bestimmung unter der Leistungsaufnahme der ersten Bestimmung liegt;
g) Eine periodische Wiederholung der Verfahrensschritte a) bis f).

Das Verfahren beruht auf der Erkenntnis, dass die Leitungsaufnahme des elektrisch betriebenen Kühlkreislaufs absinkt sobald der wenigstens eine weitere elektrische Verbraucher zugeschaltet wird und die von der wenigstens einen regenerativen Stromquelle produzierte elektrische Leistung nicht ausreicht, um sowohl den elektrisch betriebenen Kühlkreislauf als auch den wenigstens einen weiteren elektrischen Verbraucher ausreichend mit Strom zu versorgen. Dieses Absinken der Leistungsaufnahme wird von dem ersten Sensor des Stromverteilers bestimmt und an die Regelung des Stromverteilers weitergegeben. Anhand der Vorranglogik bewirkt die Regelung dann, dass der wenigstens eine weitere elektrische Verbraucher wieder von der wenigstens einen regenerativen Stromquelle getrennt wird.

Steht hingegen für den Betrieb des elektrisch betriebenen Kühlkreislaufs der Kühlvorrichtung sowie für den wenigstens einen weiteren elektrischen Verbraucher ausreichend elektrische Leistung der wenigstens einen regenerativen Stromquelle zur Verfügung, so sinkt die Leistungsaufnahme des elektrisch betriebenen Kühlkreislaufs in der zweiten Bestimmung gegenüber der ersten Bestimmung nicht ab. Entsprechend kann der wenigstens eine weitere elektrische Verbraucher auch weiterhin betrieben werden.

Da die Verfahrensschritte a) bis f) periodisch, d.h. regelmäßig wiederholt werden, wird einerseits ein Anstieg bzw. ein Abfall der von der wenigstens einen regenerativen Stromquelle produzierten elektrischen Leistung von der Regelung des Stromverteilers erfasst und entsprechend der wenigstens eine weitere elektrische Verteiler mit der wenigstens einen regenerativen Stromquelle verbunden bzw. von dieser getrennt. Darüber hinaus berücksichtigt die Regelung des Stromverteilers auch eine veränderte Leistungsaufnahme des elektrisch betriebenen Kühlkreislaufs, beispielsweise wenn dieser im Betrieb den wenigstens einen verschließbaren Kühlraum kühlt bzw. wenn der elektrisch betriebene Kühlkreislauf nicht in Betrieb ist. Dies ermöglicht es, ein Maximum an überschüssiger elektrischer Leistung an den wenigstens einen weiteren elektrischen Verbraucher abzugeben.

Das zweite erfindungsgemäße Verfahren zum Betrieb einer erfindungsgemäßen Kühlvorrichtung umfasst die folgenden Verfahrensschritte:
a) Eingabe der maximalen Leistungsaufnahme des elektrisch betriebenen Kühlkreislaufs der Kühlvorrichtung, Eingabe der Leistungskennwerte der regenerativen Stromquelle und Eingabe der maximalen Leistungsaufnahme des wenigstens einen weiteren elektrischen Verbrauchers in den Speicher der Regelung;
b) Bestimmung der Dichte der verfügbaren Energie durch den zweiten Sensor;
c) Berechnung der zur Verfügung stehenden Leistung der regenerativen Stromquelle in der Recheneinheit der Regelung anhand der Leistungskennwerte der regenerativen Stromquelle und der Dichte der verfügbaren Energie;
d) Verbinden des wenigstens einen weiteren elektrischen Verbrauchers mit der wenigstens einen regenerativen Stromquelle, wenn die zur Verfügung stehende Leistung der regenerativen Stromquelle größer oder gleich der Summe der maximalen Leistungsaufnahme des elektrisch betriebenen Kühlkreislaufs der Kühlvorrichtung und der maximalen Leistungsaufnahme des wenigstens einen weiteren elektrischen Verbrauchers ist;
e) Trennen des wenigstens einen weiteren elektrischen Verbrauchers von der wenigstens einen regenerativen Stromquelle, wenn die zur Verfügung stehende Leistung der regenerativen Stromquelle kleiner der Summe der maximalen Leistungsaufnahme des elektrisch betriebenen Kühlkreislaufs der Kühlvorrichtung und der maximalen Leistungsaufnahme des wenigstens einen weiteren elektrischen Verbrauchers ist;
f) Eine periodische Wiederholung der Verfahrensschritte b) bis e).

Das zweite Verfahren bietet den Vorteil, dass immer ein fester Betrag der von dem wenigstens einen regenerativen elektrischen Verbraucher produzierten elektrischen Leistung für den Betreib des elektrisch betriebenen Kühlkreislauf der Kühlvorrichtung reserviert ist. Hierdurch wird zwar die dem wenigstens einen weiteren elektrischen Verbraucher zur Verfügung gestellte elektrische Leistung verringert, jedoch gleichzeitig die Versorgungssicherheit der Kühlvorrichtung mit ausreichend elektrischer Energie erhöht. Das Verfahren beruht darauf, dass vorhergesagt wird, wieviel elektrische Leistung die wenigstens eine regenerative Stromquelle produziert und ob dies ausreicht um neben dem elektrisch betriebenen Kühlkreislauf der Kühlvorrichtung auch den wenigstens einen weiteren elektrischen Verbraucher ausreichend mit Strom zu versorgen. Anhand der Leistungskennwerte der wenigstens einen regenerativen Stromquelle und der bestimmten Dichte der verfügbaren Energie wird die zur Verfügung stehende Leistung der wenigstens einen regenerativen Stromquelle berechnet. Unter den Leistungskennwerten der wenigstens einen regenerativen Stromquelle wird dabei im Rahmen der Erfindung berechnet, bei welcher Dichte an verfügbarer Energie die wenigstens eine regenerative Stromquelle wieviel elektrische Leistung tatsächlich zur Verfügung stellt.

Ist die Größe der zur Verfügung stehenden elektrischen Leistung der regenerativen Stromquelle größer oder gleich der Summe der maximalen Leistungsaufnahme des elektrisch betriebenen Kühlkreislaufs der Kühlvorrichtung und der maximalen Leistungsaufnahme des wenigstens einen weiteren elektrischen Verbrauchers, verbindet die Regelung den wenigstens einen weiteren elektrischen Verbraucher mit der wenigstens einen regenerativen Stromquelle. Reicht die zur Verfügung stehende Leistung der regenerativen Stromquelle dagegen nicht aus, wird der wenigstens eine weitere elektrische Verbraucher durch die Regelung von der wenigstens einen regenerativen Stromquelle getrennt oder erst gar nicht mit dieser verbunden.

Da die Bestimmung der Dichte der verfügbaren Energie sowie die nachfolgenden Verfahrensschritte periodisch durchgeführt, d.h. regelmäßig wiederholt werden, stellt die Regelung des Stromverteilers sicher, dass sowohl bei einer wechselhaften Dichte der verfügbaren Energie dem elektrisch betriebenen Kühlkreislauf der Kühlvorrichtung immer der maximale Bedarf an elektrischer Leistung zur Verfügung steht.

Das dritte erfindungsgemäße Verfahren zum Betrieb einer erfindungsgemäßen Kühlvorrichtung umfasst die folgenden Verfahrensschritte:
a) Eingabe der Betriebsspannung/Sollspannung in den Speicher;
b) Erste Spannungsmessung der an der Kühlvorrichtung anliegenden Versorgungsspannung durch den ersten Sensor;
c) Speichern des Wertes der ersten Spannungsmessung im Speicher der Regelung;
d) Vergleich der Betriebsspannung/Sollspannung mit dem Wert der ersten Spannungsmessung in der Regelung: Wenn der Wert der ersten Spannungsmessung kleiner der Betriebsspannung/Sollspannung ist, weiter zu Verfahrensschritt b), sonst weiter zu Verfahrensschritt e);
e) Verbinden des wenigstens einen weiteren elektrischen Verbrauchers mit der wenigstens einen regenerativen Stromquelle;
f) Zweite Spannungsmessung der an der Kühlvorrichtung anliegenden Versorgungsspannung durch den ersten Sensor nach dem Verbinden des wenigstens einen weiteren elektrischen Verbrauchers mit der wenigstens einen regenerativen Stromquelle;
g) Vergleich der Betriebsspannung/Sollspannung mit dem Wert der zweiten Spannungsmessung in der Regelung: Wenn der Wert der zweiten Spannungsmessung größer oder gleich der Betriebsspannung/Sollspannung ist, weiter zu Verfahrensschritt f), sonst weiter zu Verfahrensschritt h);
h) Trennen des wenigstens einen weiteren elektrischen Verbrauchers von der wenigstens einen regenerativen Stromquelle, wenn die Betriebsspannung/Sollspannung größer als der Wert der zweiten Spannungsmessung;
i) Eine periodische Wiederholung der Verfahrensschritte b) bis h).

Das Verfahren beruht auf der Erkenntnis, dass die elektrische Versorgungsspannung, mit welcher der elektrisch betriebene Kühlkreislauf der Kühlvorrichtung versorgt wird, sinkt, sobald der wenigstens eine weitere elektrische Verbraucher zugeschaltet wird und die von der wenigstens einen regenerativen Stromquelle produzierte elektrische Leistung nicht ausreicht, um sowohl den elektrisch betriebenen Kühlkreislauf als auch den wenigstens einen weiteren elektrischen Verbraucher ausreichend mit Strom zu versorgen.

In dem erfindungsgemäßen Verfahren wird dabei zunächst in einer ersten Spannungsmessung gemessen, wie hoch die Versorgungsspannung vor dem Zuschalten des wenigstens einen weiteren elektrischen Verbrauchers ist. Ist der Messwert der Versorgungsspannung aus der ersten Spannungsmessung kleiner als die Betriebsspannung/Sollspannung des elektrisch betriebenen Kühlkreislaufs der Kühlvorrichtung, ist die von der wenigstens einen regenerativen Stromquelle produzierte elektrische Leistung nicht ausreichend um den wenigstens einen weiteren elektrischen Verbraucher mit zu versorgen.

Ist der Messwert der ersten Spannungsmessung gleich groß oder größer als die Betriebsspannung/Sollspannung, kann der wenigstens eine weitere elektrische Verbraucher zugeschaltet werden. Wird in einer hierauf folgenden zweiten Spannungsmessung der Versorgungsspannung festgestellt, dass der Wert der zweiten Spannungsmessung gegenüber der Betriebsspannung/Sollspannung nicht einbricht bzw. sinkt, reicht die von der wenigstens einen regenerativen Stromquelle produzierte elektrische Leistung auch aus, um sowohl den elektrisch betriebenen Kühlkreislauf der Kühlvorrichtung als auch den wenigstens einen weiteren elektrischen Verbraucher zu versorgen. Bei einem Einbrechen bzw. Sinken der Versorgungsspannung hingegen wird der wenigstens eine weitere elektrische Verbraucher wieder von der wenigstens einen regenerativen Stromquelle getrennt, um die bevorzugte Stromversorgung des elektrisch betriebenen Kühlkreislauf der Kühlvorrichtung sicherzustellen.

Der zuvor beschriebene Effekt, das Einbrechen/Absinken die Versorgungsspannung, tritt zudem auch dann auf, wenn die Leistungsaufnahme der Kühlvorrichtung steigt. Dies kann beispielsweise dann der Fall sein, wenn der elektrisch betriebene Kühlkreislauf, beispielsweise nach der Zugabe von neuem Kühlgut in den wenigstens einen verschließbaren Kühlraum, beginnt, diesen wieder abzukühlen und gleichzeitig die von der wenigstens einen regenerativen Stromquelle produzierte elektrische Leistung nicht ausreicht, um auch den wenigstens einen weiteren elektrischen Verbraucher ausreichend zu versorgen.

Da die Verfahrensschritte b) bis i) periodisch, d.h. regelmäßig wiederholt werden, wird einerseits ein Einbrechen der elektrischen Versorgungsspannung erfasst, sobald einerseits die Leistungsaufnahme des elektrisch betriebenen Kühlkreislaufs ansteigt oder die von der wenigstens einen regenerativen Stromquelle produzierte elektrische Leistung sinkt. Entsprechend wird einerseits sichergestellt, dass der elektrisch betriebene Kühlkreislauf der Kühlvorrichtung sicher mit ausreichend Strom versorgt wird und andererseits ein Maximum von überschüssig produzierter elektrischer Leistung dem wenigstens einen weiteren elektrischen Verbraucher zur Verfügung gestellt wird.

Nachfolgend wird die Erfindung anhand von drei in den Figuren dargestellten Ausführungsbeispielen der Kühlvorrichtung näher erläutert. Darin zeigt:
- Fig. 1: eine Kühlvorrichtung in einer ersten Ausführungsform;
- Fig. 2: eine Kühlvorrichtung in einer zweiten Ausführungsform;
- Fig. 3: eine schematische Anordnung der Komponenten einer Kühlvorrichtung gemäß der ersten oder zweiten Ausführungsform;
- Fig.4: eine schematische Anordnung der Komponenten einer Kühlvorrichtung gemäß einer dritten Ausführungsform;
- Fig. 5: eine Detailansicht des Stromverteilers für eine Kühlvorrichtung nach der ersten oder zweiten Ausführungsform;
- Fig. 6: eine perspektivische Ansicht von vorne auf eine Kühlvorrichtung nach der ersten Ausführungsform;
- Fig. 7: eine perspektivische Ansicht auf die Rückseite einer Kühlvorrichtung nach der ersten Ausführungsform;
- Fig. 8: eine perspektivische Detailansicht der Rückseite des in Fig. 7 gezeigten Stromverteilers;
- Fig. 9: ein Fließdiagramm mit den Verfahrensschritten des ersten Verfahrens;
- Fig. 10: ein Fließdiagramm mit den Verfahrensschritten des zweiten Verfahrens; und
- Fig. 11: ein Fließdiagramm mit den Verfahrensschritten des dritten Verfahrens.

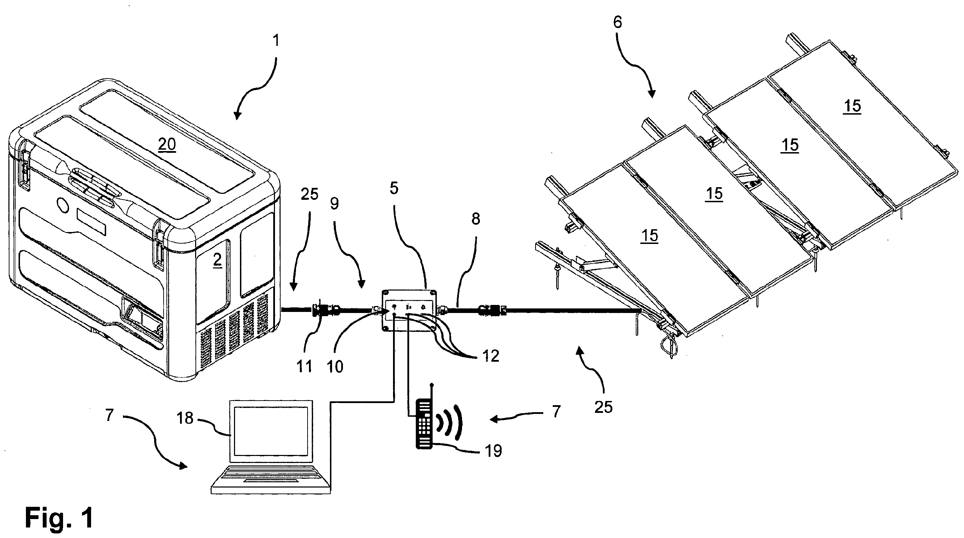

Die in Fig. 1 gezeigte erste Ausführungsform der erfindungsgemäßen Kühlvorrichtung 1 ist als Kühltruhe 2 ausgebildet und mit einem Kühltruhendeckel 20 verschließbar. Die Kühlvorrichtung 1 ist über eine Verkabelung 25 am ersten Leistungsausgang 9 mit dessen Kühlvorrichtungsanschluss 11 an den Stromverteiler 5 angeschlossen. Der Stromverteiler 5 wiederum ist über eine Verkabelung 25 von seinem Leistungseingang 8 aus mit einer regenerativen Stromquelle 6 verbunden. Die regenerative Stromquelle 6 besteht hier aus vier Solarpaneelen 15. Darüber hinaus weist der Stromverteiler einen zweiten Leistungsausgang 10 auf, der über drei Verbraucheranschlüsse verfügt. An zwei der drei Verbraucheranschlüsse sind jeweils ein Computer 18 und ein Telefon 19 als elektrische Verbraucher 7 angeschlossen. In der ersten Ausführungsform der Kühlvorrichtung 1 ist der Stromverteiler 5 separat von der Kühlvorrichtung 1 angeordnet und nur über die Kabelverbindung 25 mit dieser verbunden.

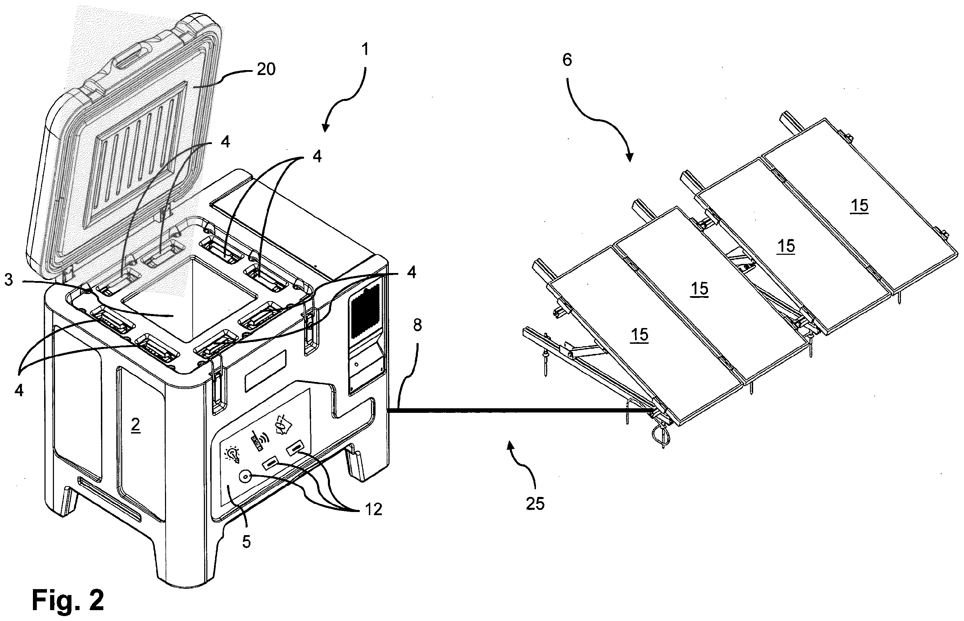

In der in Fig. 2 gezeigten zweiten Ausführungsform der erfindungsgemäßen Kühlvorrichtung 1 ist die Kühlvorrichtung als Kühltruhe 2 ausgebildet, auf deren Innenseite sich der verschließbare Kühlraum 3 befindet. Auf der Innenseite der Kühltruhe 2 sind acht Kältespeicher 4 angeordnet. Die zweite Ausführungsform der Kühlvorrichtung 1 unterscheidet sich von der ersten Ausführungsform dahingehend, dass der Stromverteiler 5 an der Kühlvorrichtung 1 integriert angeordnet ist. Die Kabelverbindung 25 verläuft dabei von der wenigstens einen regenerativen Stromquelle 6 direkt über den Leistungseingang 8 zum Stromverteiler 5 hin. Die gezeigte Ausführungsform der wenigstens einen regenerativen Stromquelle 6 umfasst in Fig. 2 ebenfalls vier Solarpaneele 15. In der zweiten Ausführungsform der Kühlvorrichtung 1 ist der Kühlvorrichtungsanschluss 11 des ersten Leistungsausgangs 9, welcher den elektrisch betriebenen Kühlkreislauf der Kühlvorrichtung 1 mit elektrischem Strom versorgt, verdeckt in der Kühltruhe 2 angeordnet und daher in der Darstellung von Fig. 2 nicht sichtbar. In der zweiten Ausführungsform sind an der Kühltruhe 2 drei Verbraucheranschlüsse 12 des Stromverteilers 5 derart angeordnet, dass diese leicht zugänglich sind, so dass der (nicht gezeigte) wenigstens eine elektrische Verbraucher 7 an den Stromverteiler 5 angeschlossen werden kann.

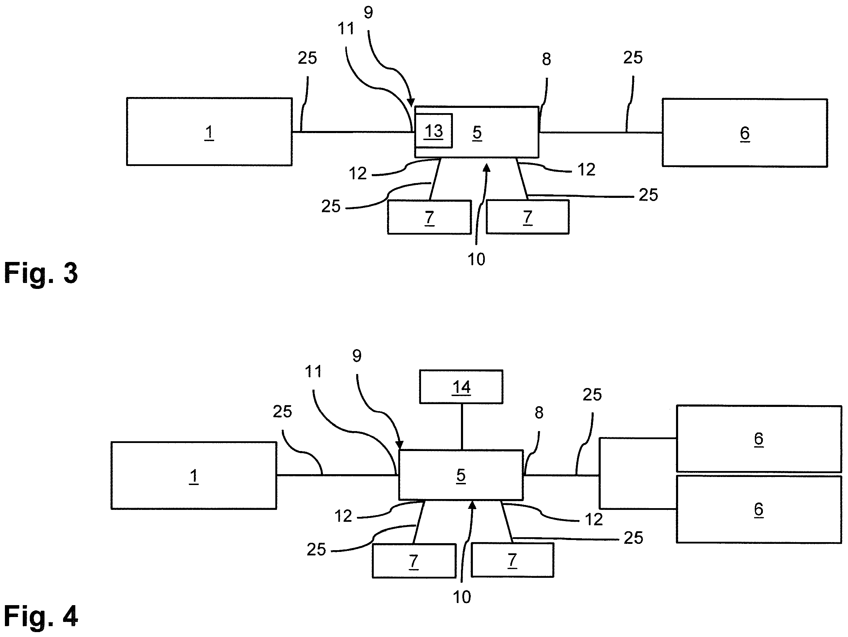

In der in Fig. 3 gezeigten schematischen Darstellung sind die einzelnen Komponenten der Kühlvorrichtung 1 in der ersten und der zweiten Ausführungsform zueinander angeordnet und über Kabelverbindungen 25 miteinander verbunden. Für die schematische Darstellung der Anordnung ist es nicht relevant, ob der Stromverteiler 5 in der Kühlvorrichtung 1 integriert oder außerhalb von der Kühlvorrichtung 1 angeordnet ist. Wie bereits in Fig. 1 und Fig. 2 gezeigt, ist die regenerative Stromquelle 6 am Leistungseingang 8 über eine Kabelverbindung 25 mit dem Stromverteiler 5 verbunden. Darüber hinaus ist die Kühlvorrichtung 1 mit ihrem elektrisch betriebenen Kühlkreislauf über den Kühlvorrichtungsanschluss 11 des ersten Leistungsausgangs 9 ebenfalls über eine Kabelverbindung 25 mit dem Stromverteiler 5 verbunden. Ferner ist in Fig. 3 dargestellt, wie zwei der wenigstens einen weiteren elektrischen Verbraucher 7 über je eine Kabelverbindung 25 und die Verbraucheranschlüsse 12 des zweiten Leistungsausgang 10 mit der Stromverteilungsvorrichtung 5 verbunden sind. Der im Inneren des Stromverteilers 5 angeordnete schematisch gezeigte erste Sensor 13 dient dazu, die Leistungsaufnahme des elektrisch betriebenen Kühlkreislaufs der Kühlvorrichtung 1 zu bestimmen.

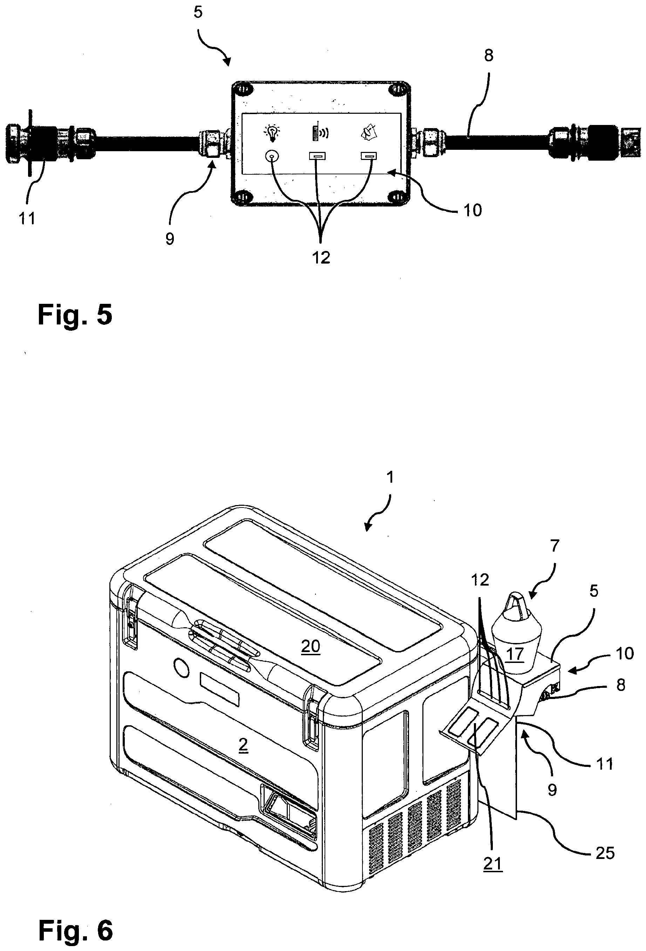

Die in Fig. 4 gezeigte schematische Darstellung einer Kühlvorrichtung 1 einer dritten Ausführungsform der Kühlvorrichtung 1 unterscheidet sich dahingehend von der ersten bzw. zweiten Ausführungsform Kühlvorrichtung 1 dahingehend, dass der Stromverteiler 5 einen zweiten Sensor 14 aufweist, welcher die Dichte der verfügbaren Energie misst, die auf die wenigstens eine regenerative Stromquelle einwirkt. Auch in dem gezeigten dritten Ausführungsbeispiel kann der Stromverteiler 5 in der Kühlvorrichtung 1 integriert bzw. außerhalb von der Kühlvorrichtung 1 angeordnet sein. Der zweite Sensor ist jedoch außerhalb der Kühlvorrichtung 1, nahe der wenigstes einen regenerativen Stromquelle 6 angeordnet. Die in Fig. 6 gezeigte Ausführungsform weist zudem zwei regenerative Stromquellen 6 auf, die an dem Stromverteiler angeschlossen sind. Die Anordnung der weiteren Komponenten in Fig. 4 entspricht dabei der in Fig. 3 gezeigten schematischen Anordnung.

Der in Fig. 5 gezeigte Stromverteiler 5 der ersten Ausführungsform der Kühlvorrichtung 1 ist außerhalb der Kühlvorrichtung 1 angeordnet. Der Stromverteiler 5 verfügt über einen Leistungseingang 8, einen ersten Leistungsausgang 9 mit einem Kühlvorrichtungsanschluss 11 sowie einem zweiten Leistungsausgang 10 der über drei Verbraucheranschlüsse 12 verfügt. Der erste Sensor zur Bestimmung der Leistungsaufnahme des elektrisch betriebenen Kühlkreislaufs der Kühlvorrichtung 1 ist im Inneren des Stromverteilers 5 verbaut (nicht sichtbar).

Die in Fig. 6 gezeigte erfindungsgemäße Kühlvorrichtung 1 gemäß der ersten Ausführungsform weist einen seitlich an der Kühlvorrichtung 1 befestigten Stromverteiler 5 auf. Die Kühlvorrichtung 1 ist hierbei als Kühltruhe 2 ausgebildet. Diese wird von einem Kühltruhendeckel 20 verschlossen. Die Verbindung zwischen der Kühlvorrichtung 1 und dem Stromverteiler 5 entspricht der in Fig. 3 gezeigten Ausführung, wobei jedoch die wenigstens eine regenerative Stromquelle 6 nicht gezeigt ist. Am zweiten Leistungsausgang 10 ist eine Lampe 17 als wenigstens ein weiterer elektrischer Verbraucher 7 dargestellt. Darüber hinaus verfügt der Stromverteiler 5 über eine Ablagefläche 21 und über vier weitere Verbraucheranschlüsse 12 am zweiten Leistungsausgang 10.

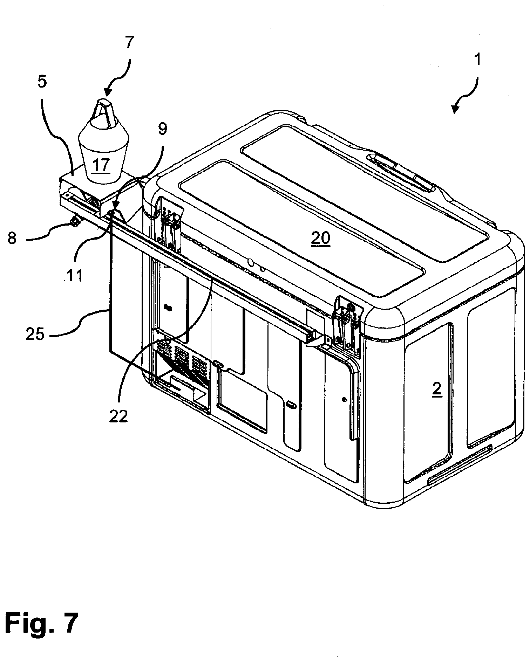

Bei der in Fig. 7 gezeigten Kühlvorrichtung 1 ist der Stromverteiler 5 mit Hilfe einer Schiene 22 an der Rückseite der Kühltruhe 2 befestigt. Die Schiene 22 ragt seitlich über die Kühltruhe 2 hinaus, so dass der Stromverteiler 5 seitlich an der Kühlvorrichtung 1 angeordnet werden kann. Der Leistungseingang 8 sowie der erste Leistungsausgang 9 sind auf der Rückseite des Stromverteilers 5 angeordnet. Der erste Leistungsausgang 9 ist mit dem Kühlvorrichtungsanschluss 11 über eine Kabelverbindung 25 auf der Rückseite der Kühltruhe 2 verbunden.

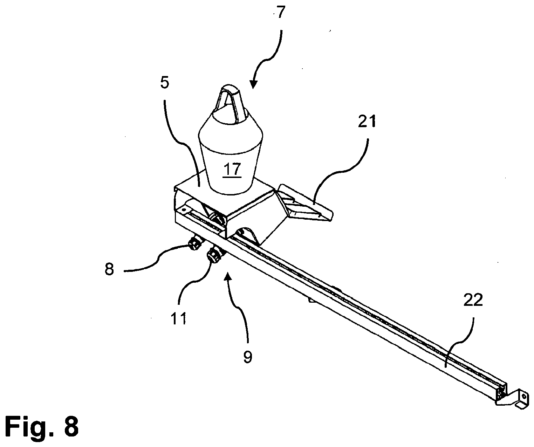

Der in Fig. 8 gezeigte Leistungseingang 8 sowie der erste Leistungsausgang 9 des Stromverteilers 5 sind mit dem Kühlvorrichtungsanschluss 11 als eine Steckverbindung ausgebildet.

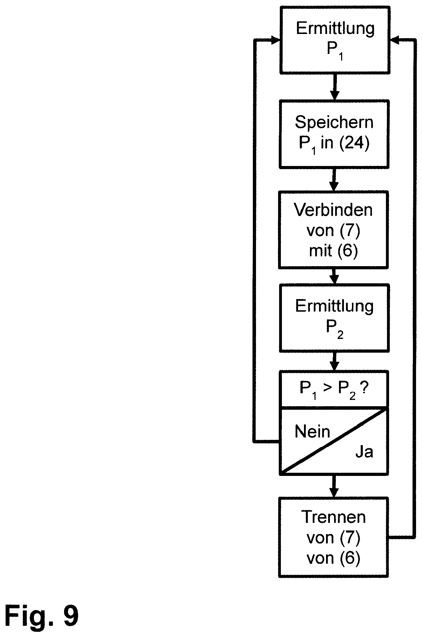

Fig. 9 zeigt ein Fließdiagramm über den Ablauf des ersten Verfahrens zum Betrieb einer Kühlvorrichtung 1. Das erste Verfahren ist dabei zum Betrieb einer Kühlvorrichtung 1 nach der ersten bzw. zweiten Ausführungsform geeignet. Zunächst wird eine erste Bestimmung P₁ der Leistungsaufnahme des elektrisch betriebenen Kühlkreislaufs vorgenommen. Der Wert der ersten Bestimmung P₁ wird im Speicher 24 der Regelung des Stromverteilers 5 gespeichert. Anschließend wird der wenigstens eine weitere elektrische Verbraucher 7 mit der wenigstens einen regenerativen Stromquelle 6 verbunden. Hierauf folgt eine zweite Bestimmung P₂ der Leistungsaufnahme des elektrisch betriebenen Kühlkreislaufs. In der Recheneinheit 23 des Stromverteilers 5 erfolgt ein Vergleich zwischen dem Messwert der ersten Bestimmung P₁ und dem Messwert der zweiten Bestimmung P₂. Liegt dabei der Messwert der zweiten Bestimmung P₂ unterhalb des Messwertes der ersten Bestimmung P₁, bedeutet dies, dass von der wenigstens einen regenerativen Stromquelle 6 nicht ausreichend elektrische Leistung zur Verfügung gestellt werden kann, um sowohl den elektrisch betriebenen Kühlkreislauf der Kühlvorrichtung 1 sowie den wenigstens einen weiteren elektrischen Verbraucher 7 ausreichend mit Strom zu versorgen. Entsprechend trennt die Regelung den wenigstens einen weiteren elektrischen Stromverbraucher 7 von der regenerativen Stromquelle 6, um die Versorgung des elektrisch betriebenen Kühlkreislaufs sicherzustellen. ist hingegen der Messwert der ersten Bestimmung P₁ gleich dem Messwert der zweiten Bestimmung P₂, bedeutet dies, dass von der regenerativen Stromquelle 6 ausreichend elektrische Leistung zur Verfügung gestellt wird, um sowohl den elektrisch betriebenen Kühlkreislauf der Kühlvorrichtung 1 als auch den wenigstens einen weiteren elektrischen Verbraucher 7 mit Strom zu versorgen. Entsprechend wird die Verbindung zwischen der wenigstens einen regenerativen Stromquelle 6 und dem wenigstens einen weiteren elektrischen Verbraucher 7 nicht getrennt. Nach Abschluss des Vergleiches zwischen dem Messwert der ersten Bestimmung P₁ und dem Messwert der zweiten Bestimmung P₂ werden die Verfahrensschritte durch eine erneute Bestimmung des Messwertes der ersten Bestimmung P₁ wiederholt.

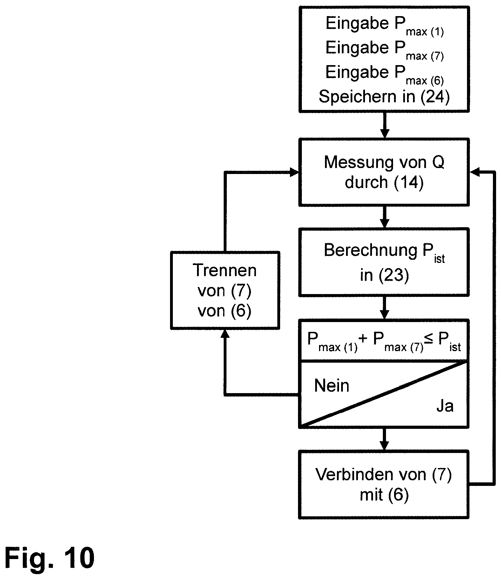

Fig. 10 zeigt ein Fließdiagramm über die Verfahrensschritte des zweiten Verfahrens zum Betrieb einer Kühlvorrichtung 1. Das zweite Verfahren zum Betrieb einer Kühlvorrichtung 1 ist dafür geeignet, eine Kühlvorrichtung 1 nach der dritten Ausführungsform zu betreiben. Im Verfahrensablauf wird zunächst die maximale Leistungsaufnahme Pₘₐₓ₍₁₎ des elektrisch betriebenen Kühlkreislaufs der Kühlvorrichtung 1 sowie die maximale Leistungsaufnahme Pₘₐₓ₍₇₎ des wenigstens einen weiteren elektrischen Verbrauchers in den Speicher 24 der Regelung des Stromverteilers 5 gespeichert. Darüber hinaus werden in den Speicher 24 der Regelung auch die Leistungskennwerte Pₘₐₓ₍₆₎ der regenerativen Stromquelle 6 eingegeben und gespeichert. Anschließend findet eine Bestimmung der Dichte der verfügbaren Energie Q durch den zweiten Sensor 14 statt. Anhand der gespeicherten Leistungskennwerte Pₘₐₓ₍₆₎ der wenigstens einen regenerativen Stromquelle sowie der Dichte der verfügbaren Energie Q lässt sich die zur Verfügung stehende Leistung Pᵢₛₜ der wenigstens einen regenerativen Stromquelle 5 in der Recheneinheit 23 der Regelung berechnen.

Anschließend wird die zur Verfügung stehende elektrische Leistung Pᵢₛₜ der wenigstens einen regenerativen Stromquelle 6 mit der Summe der für den Betrieb des elektrisch betriebenen Kühlkreislaufs der Kühlvorrichtung erforderlichen maximalen Leistungsaufnahme Pₘₐₓ₍₁₎ und der maximalen Leistungsaufnahme Pₘₐₓ₍₇₎ des wenigstens einen weiteren elektrischen Verbrauchers 7 verglichen. Ergibt der Vergleich, dass die zur Verfügung stehende Leistung Pᵢₛₜ der wenigstens einen regenerativen Stromquelle 6 größer oder gleich der Summe der maximalen Leistungsaufnahme Pₘₐₓ₍₁₎ des elektrisch betriebenen Kühlkreislaufs und der maximale Leistungsaufnahme Pₘₐₓ₍₇₎ des wenigstens einen weiteren elektrischen Verbrauchers 7 ist, wird der eine weitere elektrische Verbraucher 7 mit der wenigstens einen regenerativen Stromquelle 6 verbunden. Anderenfalls, wenn die zur Verfügung stehende elektrische Leistung Pᵢₛₜ der regenerativen Stromquelle zu gering ist, wird der wenigstens eine weitere elektrische Verbraucher 7 von der wenigstens einen regenerativen Stromquelle 6 getrennt bzw. nicht mit dieser verbunden. Nach dem Ablauf der Verfahrensschritte wird erneut eine Bestimmung der Dichte der verfügbaren Energie Q durchgeführt und das Verfahren erneut abgearbeitet.

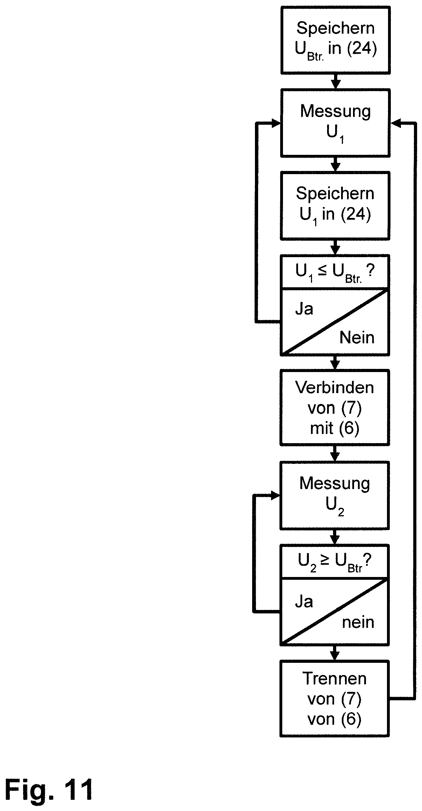

Fig. 11 zeigt ein Fließdiagramm über die Verfahrensschritte des dritten Verfahrens zum Betrieb einer Kühlvorrichtung 1. Das dritte Verfahren ist dabei zum Betrieb einer Kühlvorrichtung 1 nach der ersten bzw. zweiten Ausführungsform geeignet. Im Verfahrensablauf wird zunächst die Betriebsspannung/Sollspannung U_{Btr.} des elektrisch betriebenen Kühlkreislaufs der Kühlvorrichtung 1 in der Regelung des Stromverteilers 5 gespeichert. Danach erfolgt eine erste Spannungsmessung U₁ der Versorgungsspannung. Der Wert der ersten Spannungsmessung U₁ wird im Speicher 24 der Regelung des Stromverteilers 5 gespeichert.

Anschließend wird wie in Fig. 11 dargestellt, in der Regelung der Messwert der ersten Spannungsmessung U₁ mit der Betriebsspannung/Sollspannung U_{Btr.} verglichen. Ergibt sich dabei, dass der Messwert der ersten Spannungsmessung U₁ kleiner ist als die Betriebsspannung/Sollspannung U_{Btr.}, wird erneut eine erste Spannungsmessung U₁ durchgeführt. Ist der Messwert der ersten Spannungsmessung U₁ hingegen größer oder gleich der Betriebsspannung/Sollspannung U_{Btr.} wird der wenigstens eine weitere elektrische Verbraucher 7 mit der wenigstens einen regenerativen Stromquelle 6 verbunden. Anschließend wird in eine zweite Spannungsmessung U₂ die Versorgungsspannung gemessen und in der Regelung mit der Betriebsspannung/Sollspannung U_{Btr.} verglichen. Ergibt sich dabei, dass der Messwert der zweiten Spannungsmessung U₂ größer ist, als oder gleichgroß ist, wie die Betriebsspannung/Sollspannung U_{Btr.}, erfolgt eine erneute zweite Spannungsmessung U₂ der Versorgungsspannung und ein erneuter Vergleich zwischen dem Messwert der zweite Spannungsmessung U₂ und der Betriebsspannung/Sollspannung U_{Btr.}. Ist der Messwert der zweiten Spannungsmessung U₂ kleiner als die Betriebsspannung/Sollspannung U_{Str.}, wird der wenigstens eine weitere elektrische Verbraucher 7 von der wenigstens einen regenerativen Stromquelle 6 getrennt. Nach dem Trennen des wenigstens einen weiteren elektrischen Verbrauchers 7 von der wenigstens einen regenerativen Stromquelle 6 erfolgt eine erneute erste Spannungsmessung U₁ der Versorgungsspannung. Die Verfahrensschritte b) bis h) werden regelmäßig wiederholt.

### Referenzzeichenliste

- 1:: Kühlvorrichtung
- 2:: Kühltruhe
- 3:: Verschließbarer Kühlraum
- 4:: Kältespeicher
- 5:: Stromverteiler
- 6:: Regenerative Stromquelle
- 7:: Elektrischer Verbraucher
- 8:: Leistungseingang
- 9:: Erster Leistungsausgang
- 10:: Zweiter Leistungsausgang
- 11:: Kühlvorrichtungsanschluss
- 12:: Verbraucheranschluss
- 13:: Erster Sensor
- 14:: Zweiter Sensor
- 15:: Solarkollektor
- 16:: Windangetriebener Generator
- 17:: Lampe
- 18:: Computer
- 19:: Telefon
- 20:: Kühltruhendeckel
- 21:: Ablagefläche
- 22:: Befestigungsvorrichtung
- 23:: Recheneinheit
- 24: Speicher
- 25:: Kabelverbindung
- P₁:: Erste Bestimmung
- P₂:: Zweite Bestimmung
- Pₘₐₓ₍₁₎:: Maximale Leistungsaufnahme des elektrisch betriebenen Kühlkreislaufs
- Pₘₐₓ₍₇₎: Maximale Leistungsaufnahme des wenigstens einen weiteren elektrischen Verbrauchers
- Pₘₐₓ₍₆₎:: Leistungskennwerte der wenigstens einen regenerativen Stromquelle
- Pᵢₛₜ:: Zur Verfügung stehende Leistung der wenigstens einen regenerativen Stromquelle
- Q:: Dichte der verfügbaren Energie
- U_{Btr}:: Betriebsspannung/Sollspannung
- U₁:: Erste Spannungsmessung
- U₂:: Zweite Spannungsmessung

## Patentansprüche

1. Kühlvorrichtung (1), insbesondere Kühltruhe (2), mit wenigstens einem verschließbaren Kühlraum (3), einem elektrisch betriebenen Kühlkreislauf und vorzugsweise einem Kältespeicher (4), wobei der wenigstens eine verschließbare Kühlraum (3) und der Kältespeicher (4) durch den elektrisch betriebenen Kühlkreislauf kühlbar sind,
die Kühlvorrichtung (1) einen Stromverteiler (5) zur Verteilung von elektrischer Leistung von wenigstens einer regenerativen Stromquelle (6) an den elektrisch betriebenen Kühlkreislauf der Kühlvorrichtung (1) und an wenigstens einen weiteren elektrischen Verbraucher (7) aufweist, und
der Stromverteiler (5) wenigstens einen Leistungseingang (8), einen ersten Leistungsausgang (9) und wenigstens einen zweiten Leistungsausgang (10) aufweist, wobei der wenigstens eine Leistungseingang (8) mit der wenigstens einen regenerativen Stromquelle (6) verbunden werden kann, und der erste Leistungsausgang (9) als ein Kühlvorrichtungsanschluss (11) zum Anschluss des elektrisch betriebenen Kühlkreislaufs der Kühlvorrichtung (1) ausgebildet ist, und der wenigstens eine zweite Leistungsausgang (10) als Verbraucheranschluss (12) zum Anschluss des wenigstens einen weiteren elektrischen Verbrauchers (7) ausgebildet ist,
wobei
auf einen zusätzlichen Akkumulator zur Pufferung von Lastspitzen verzichtet wird, ohne die Versorgungssicherheit der Kühlvorrichtung mit ausreichend elektrischer Leistung zu verringern;
**dadurch gekennzeichnet, dass**
der Stromverteiler (5) eine Regelung mit einer Recheneinheit (23), einem Speicher (24) und einer Vorranglogik aufweist, wobei die Vorranglogik bei einem Mangel an elektrischer Leistung der wenigstens einen regenerativen Stromquelle (6) den elektrisch betriebenen Kühlkreislauf der Kühlvorrichtung (1) bevorzugt mit Strom versorgt; und
der Stromverteiler (5) den wenigstens einen weiteren elektrischen Verbraucher (7) von der wenigstens einen regenerativen Stromquelle (6) trennt, sobald die produzierte elektrische Leistung der wenigstens einen regenerativen Stromquelle (6) die Leistungsaufnahme der Kühlvorrichtung (1) und des wenigstens einen weiteren elektrischen Verbrauchers (7) unterschreitet.

2. Kühlvorrichtung (1) nach Anspruch 1
**dadurch gekennzeichnet, dass**
die wenigstens eine regenerative Stromquelle (6) als ein Solarkollektor (15) oder als ein windangetriebener Generator (16) ausgebildet ist.

3. Kühlvorrichtung (1 ) nach Anspruch 1 oder 2
**dadurch gekennzeichnet, dass**
der Stromverteiler (5) über wenigstens einen ersten Sensor (13) zur Bestimmung einer Leistungsaufnahme des elektrisch betriebenen Kühlkreislaufs der Kühlvorrichtung (1) verfügt.

4. Kühlvorrichtung (1) nach einem der vorhergehenden Ansprüche
**dadurch gekennzeichnet, dass**
der Stromverteiler (5) wenigstens einen zweiten Sensor (14) zur Bestimmung einer Dichte von verfügbarer Energie aufweist.

5. Kühlvorrichtung (1) nach einem der vorhergehenden Ansprüche
**dadurch gekennzeichnet, dass**
der Stromverteiler (5) den wenigstens einen weiteren elektrischen Verbraucher (7) mit der wenigstens einen regenerativen Stromquelle (6) verbindet, sobald die produzierte elektrische Leistung der wenigstens einen regenerativen Stromquelle (6) die Leistungsaufnahme des elektrisch betriebenen Kühlkreislaufs der Kühlvorrichtung (1) und des wenigstens einen weiteren elektrischen Verbrauchers (7) überschreitet.

6. Kühlvorrichtung (1) nach Anspruch 5
**dadurch gekennzeichnet, dass**
bei einer Mehrzahl von weiteren elektrischen Verbrauchern (7) der Stromverteiler (5) das Trennen von oder Verbinden mit der wenigstens einen regenerativen Stromquelle (6) in Abhängigkeit der Leistungsaufnahme des jeweiligen weiteren elektrischen Verbrauchers (7) durchführt.

7. Kühlvorrichtung (1 ) nach einem der vorhergehenden Ansprüche,
**dadurch gekennzeichnet, dass**
der Stromverteiler (5) den wenigstens einen weiteren elektrischen Verbraucher (7) mit Strom versorgt, wenn der elektrisch betriebene Kühlkreislauf der Kühlvorrichtung (1) keine elektrische Leistung aufnimmt.

8. Kühlvorrichtung (1) nach einem der vorhergehenden Ansprüche
**dadurch gekennzeichnet, dass**
der Verbraucheranschluss (12) als Ladevorrichtung für einen akkubetriebenen Verbraucher, insbesondere eine Lampe (18) und/oder einen Computer (18) und/oder ein Telefon (19) oder für einen Akkumulator selbst ausgebildet ist.

9. Kühlvorrichtung (1) nach einem der vorhergehenden Ansprüche
**dadurch gekennzeichnet, dass** die Kühlvorrichtung (1) angepasst ist zur Kühlung von medizinischen Produkten, wie beispielsweise Impfstoff, Blutkonserven oder auch jede andere Art von Blutprodukten.

10. Kühlvorrichtung (1) nach einem der vorhergehenden Ansprüche
**dadurch gekennzeichnet**, der Stromverteiler (5) einen einzigen Leistungseingang (8) aufweist und wobei der einzige Leistungseingang (8) mit der wenigstens einen regenerativen Stromquelle (6) verbunden werden kann.

11. Verfahren zum Betrieb einer Kühlvorrichtung (1) nach Anspruch 3 oder nach einem der Ansprüche 4 bis 10 soweit diese von Anspruch 3 abhängen mit folgenden Verfahrensschritten:
a) Erste Bestimmung (P₁) der Leistungsaufnahme des elektrisch betriebenen Kühlkreislaufs der Kühlvorrichtung (1) durch den ersten Sensor (13) vor dem Verbinden des wenigstens einen weiteren elektrischen Verbrauchers (7) mit der wenigstens einen regenerativen Stromquelle (6);
b) Speichern der ersten Bestimmung (P₁) im Speicher (24) der Regelung;
c) Verbinden des wenigstens einen weiteren elektrischen Verbrauchers (7) mit der wenigstens einen regenerativen Stromquelle (6);
d) Zweite Bestimmung (P₂) der Leistungsaufnahme des elektrisch betriebenen Kühlkreislaufs der Kühlvorrichtung (1) durch den ersten Sensor (13) nach dem Verbinden des wenigstens einen weiteren elektrischen Verbrauchers (7) mit der wenigstens einen regenerativen Stromquelle (6);
e) Vergleich der ersten Bestimmung (P₁) mit der zweiten Bestimmung (P₂) in der Recheneinheit;
f) Trennen des wenigstens einen weiteren elektrischen Verbrauchers (7) von der wenigstens einen regenerativen Stromquelle (6), wenn die Leistungsaufnahme der zweiten Bestimmung (P₂) unter der Leistungsaufnahme der ersten Bestimmung (P₁) liegt;
g) Eine periodische Wiederholung der Verfahrensschritte a) bis f).

12. Verfahren zum Betrieb einer Kühlvorrichtung (1 ) nach Anspruch 4 oder nach einem der Ansprüche 5 bis 10 soweit diese von Anspruch 4 abhängen mit folgenden Verfahrensschritten:
a) Eingabe der maximalen Leistungsaufnahme (Pₘₐₓ₍₁₎) des elektrisch betriebenen Kühlkreislaufs der Kühlvorrichtung (1 ), Eingabe der Leistungskennwerte (Pₘₐₓ₍₆₎) der regenerativen Stromquelle (6) und Eingabe der maximalen Leistungsaufnahme (Pₘₐₓ₍₇₎) des wenigstens einen weiteren elektrischen Verbrauchers (7) in den Speicher (24) der Regelung;
b) Bestimmung der Dichte der verfügbaren Energie (Q) durch den zweiten Sensor (14);
c) Berechnung der zur Verfügung stehenden Leistung (Pᵢₛₜ) der regenerativen Stromquelle (6) in der Recheneinheit (23) der Regelung anhand der Leistungskennwerte (Pₘₐₓ₍₆₎) der regenerativen Stromquelle (6) und der Dichte der verfügbaren Energie (Q);
d) Verbinden des wenigstens einen weiteren elektrischen Verbrauchers (7) mit der wenigstens einen regenerativen Stromquelle (6), wenn die zur Verfügung stehende Leistung (Pᵢₛₜ) der regenerativen Stromquelle (6) größer oder gleich der Summe der maximalen Leistungsaufnahme des elektrisch betriebenen Kühlkreislaufs der Kühlvorrichtung (1) und der maximalen Leistungsaufnahme des wenigstens einen weiteren elektrischen Verbrauchers (7) ist
e) Trennen des wenigstens einen weiteren elektrischen Verbrauchers (7) von der wenigstens einen regenerativen Stromquelle (6), wenn die zur Verfügung stehende Leistung (Pᵢₛₜ) der regenerativen Stromquelle (6) kleiner der Summe der maximalen Leistungsaufnahme des elektrisch betriebenen Kühlkreislaufs der Kühlvorrichtung (1) und der maximalen Leistungsaufnahme des wenigstens einen weiteren elektrischen Verbrauchers (7) ist;
f) Periodische Wiederholung der Verfahrensschritte b) bis e).

13. Verfahren zum Betrieb einer Kühlvorrichtung (1) nach Anspruch 3 oder nach einem der Ansprüche 4 bis 10 soweit diese von Anspruch 3 abhängen mit folgenden Verfahrensschritten:
a) Eingabe der Betriebsspannung/Sollspannung (U_{Btr.}) in den Speicher (24);
b) Erste Spannungsmessung (U₁) der an der Kühlvorrichtung (1) anliegenden Versorgungsspannung durch den ersten Sensor (13);
c) Speichern des Wertes der ersten Spannungsmessung (U₁) im Speicher (24) der Regelung;
d) Vergleich der Betriebsspannung/Sollspannung (U_{Btr.}) mit dem Wert der ersten Spannungsmessung (U₁) in der Regelung: Wenn der Wert der ersten Spannungsmessung (U₁) kleiner der Betriebsspannung/Sollspannung (U_{Btr.}) ist, weiter zu Verfahrensschritt b), sonst weiter zu Verfahrensschritt e);
e) Verbinden des wenigstens einen weiteren elektrischen Verbrauchers (7) mit der wenigstens einen regenerativen Stromquelle (6);
f) Zweite Spannungsmessung (U₂) der an der Kühlvorrichtung (1) anliegenden Versorgungsspannung durch den ersten Sensor (13) nach dem Verbinden des wenigstens einen weiteren elektrischen Verbrauchers (7) mit der wenigstens einen regenerativen Stromquelle (6);
g) Vergleich der Betriebsspannung/Sollspannung (U_{Btr.}) mit dem Wert der zweiten Spannungsmessung (U₂) in der Regelung: Wenn der Wert der zweiten Spannungsmessung (U₂) größer oder gleich der Betriebsspannung/Sollspannung (U_{Btr.}) ist, weiter zu Verfahrensschritt f), sonst weiter zu Verfahrensschritt h);
h) Trennen des wenigstens einen weiteren elektrischen Verbrauchers (7) von der wenigstens einen regenerativen Stromquelle (6), wenn die Betriebsspannung/Sollspannung (U_{Btr.}) größer als der Wert der zweiten Spannungsmessung (U₂);
i) Eine periodische Wiederholung der Verfahrensschritte b) bis h).

## Claims

1. A cooling device (1), in particular a freezer (2), having at least one closable cooling space (3), an electrically operated cooling circuit, and preferably a cold storage pack (4), wherein the at least one closable cooling space (3) and the cold storage pack (4) can be cooled by the electrically operated cooling circuit,
the cooling device (1) has a power distributor (5) for distributing electrical power of at least one regenerative power source (6) to an electrically operated cooling circuit of the cooling device (1) and to at least one further electricity consuming device (7), and
the power distributor (5) has at least one power input (8), a first power output (9) and at least one second power output (10), wherein the at least one power input (8) can be connected to the at least one regenerative power source (6) and wherein the first power output (9) is provided as a cooling device connection (11) for connecting the electrically operated cooling circuit of the cooling device (1) and wherein the at least one second power output (10) is provided as an electricity consuming device connection (12) for connecting the at least one further electricity consuming device (7)
wherein
an additional battery for buffering peak loads is dispensed with, without reducing the security of supply of sufficient electrical power to the cooling device,
**characterized in that**
the power distributor (5) has a control system with a computing unit (23), a memory (24), and a priority logic, wherein the priority logic in event of a lack of electrical power of the at least one regenerative power source (6) preferentially supplies the electrically operated cooling circuit of the cooling device (1) with electricity, and
the power distributor (5) disconnects the at least one further electricity consuming device (7) from the at least one regenerative power source (6) as soon as the produced electrical power of the at least one regenerative power source (6) falls below the power consumption of the cooling device (1) and the at least one further electricity consuming device (7).

2. The cooling device (1) according to claim 1,
**characterized in that**
the at least one regenerative power source (6) is a solar collector (15) or a wind-driven generator (16).

3. The cooling device (1) according to claim 1 or 2,
**characterized in that**
the power distributor (5) has at least one first sensor (13) for determining a power consumption of the electrically operated cooling circuit of the cooling device (1).

4. The cooling device (1) according to any one of the preceding claims,
**characterized in that**
the power distributor (5) has at least one second sensor (14) for determining a density of available energy.

5. The cooling device (1) according to any one of the preceding claims,
**characterized in that**
the power distributor (5) connects the at least one further electricity consuming device (7) to the at least one regenerative power source (6) as soon as the electrical power produced by the at least one regenerative power source (6) exceeds the power consumption of the electrically operated cooling circuit of the cooling device (1) and the at least one further electricity consuming device (7).

6. The cooling device (1) according to claim 5 ,
**characterized in that**
in case of operating a plurality of further electricity consuming devices (7) the power distributor (5) disconnects or connects to the at least one regenerative power source (6) as a function of the power consumption of the respective further electricity consuming devices (7).

7. The cooling device (1) according to any one of the preceding claims,
**characterized in that**
the power distributor (5) supplies the at least one further electric electricity consuming device (7) with electricity when the electrically operated cooling circuit of the cooling device (1) does not consume any electrical power.

8. The cooling device (1) according to any one of the preceding claims,
**characterized in that**
the electricity consuming device connection (12) is provided as a charging device for a battery-operated electricity consuming device, in particular a lamp (18) and/or a computer (18) and/or a telephone (19) or for a battery itself.

9. The cooling device (1) according to any one of the preceding claims,
**characterized in that** the cooling device (1) is adapted for cooling medical products, such as for example vaccines, stored blood, or any other type of blood products.

10. The cooling device (1) according to any one of the preceding claims,
**characterized in that** the power distributor (5) has a single power input (8) and wherein the single power input (8) can be connected to the at least one regenerative power source (6).

11. A method for operating a cooling device (1) according to claim 3 or according to any one of claims 4 to 10 as dependent on claim 3 with the following method steps:
a) a first determination (P₁) of the power consumption of the electrically operated cooling circuit of the cooling device (1) by the first sensor (13) before the at least one further electricity consuming device (7) is connected to the at least one regenerative power source (6);
b) storing the first determination (P₁) in the memory (24) of the control system;
c) connecting the at least one further electricity consuming device (7) to the at least one regenerative power source (6);
d) a second determination (P₂) of the power consumption of the electrically operated cooling circuit of the cooling device (1) by the first sensor (13) after the at least one further electricity consuming device (7) has been connected to the at least one regenerative power source (6);
e) comparison of the first determination (P₁) with the second determination (P₂) in the computing unit;
f) disconnecting the at least one further electricity consuming device (7) from the at least one regenerative power source (6) if the power consumption of the second determination (P₂) is below the power consumption of the first determination (P₁);
g) periodic repetition of method steps a) to f).

12. A method for operating a cooling device (1) according to claim 4 or according to any one of claims 5 to 10 as dependent on claim 4 with the following method steps:
a) inputting the maximum power consumption (Pₘₐₓ₍₁₎) of the electrically operated cooling circuit of the cooling device (1), inputting the performance characteristics (Pₘₐₓ₍₆₎) of the regenerative power source (6), and inputting the maximum power consumption (Pₘₐₓ₍₇₎) of the at least one further electricity consuming device (7) into the memory (24) of the control system;
b) determining the density of the available energy (Q) by the second sensor (14);
c) calculating the available power (P_{act}) of the regenerative power source (6) in the computing unit (23) of the control system on the basis of the performance characteristics (Pₘₐₓ₍₆₎) of the regenerative power source (6) and the density of the available energy (Q);
d) connecting the at least one further electricity consuming device (7) to the at least one regenerative power source (6) if the available power (P_{act}) of the regenerative power source (6) is greater than or equal to the sum of the maximum power consumption of the electrically operated cooling circuit of the cooling device (1) and the maximum power consumption of the at least one further electricity consuming device (7);
e) disconnecting the at least one further electricity consuming device (7) from the at least one regenerative power source (6) if the available power (P_{act}) of the regenerative power source (6) is less than the sum of the maximum power consumption of the electrically operated cooling circuit of the cooling device (1) and the maximum power consumption of the at least one further electricity consuming device (7);
f) periodic repetition of method steps b) to e).

13. A method for operating a cooling device (1) according to claim 3 or according to any one of claims 4 to 10 as dependent on claim 3 with the following method steps:
a) inputting the operating voltage/nominal voltage (Uₒₚ) into the memory (24);
b) a first voltage measurement (U₁) of the supply voltage applied to the cooling device (1) by the first sensor (13);
c) storing the value of the first voltage measurement (U₁) in the memory (24) of the control system;
d) comparing the operating voltage/nominal voltage (Uₒₚ) to the value of the first voltage measurement (U₁) in the control system: if the value of the first voltage measurement (U₁) is less than the operating voltage/nominal voltage (Uₒₚ) proceed to method step b), otherwise proceed to method step e);
e) connecting the at least one further electricity consuming device (7) to the at least one regenerative power source (6);
f) a second voltage measurement (U₂) of the supply voltage applied to the cooling device (1) by the first sensor (13) after the at least one further electricity consuming device (7) has been connected to the at least one regenerative power source (6);
g) comparing the operating voltage/nominal voltage (Uₒₚ) to the value of the second voltage measurement (U₂) in the control system: if the value of the second voltage measurement (U₂) is greater than or equal to the operating voltage/nominal voltage (Uₒₚ) proceed to method step f), otherwise proceed to method step h);
h) disconnecting the at least one further electricity consuming device (7) from the at least one regenerative power source (6) if the operating voltage/nominal voltage (Uₒₚ) is greater than the value of the second voltage measurement (U₂);
i) periodic repetition of method steps b) to h).

## Revendications

1. Dispositif de refroidissement (1), en particulier un congélateur(2), comprenant au moins un espace de refroidissement fermable (3), un circuit de refroidissement électrique, et de préférence un pack réfrigérant (4), ledit au moins un espace de refroidissement fermable (3) et le pack réfrigérant (4) peuvent être refroidis par le circuit de refroidissement,
le dispositif de refroidissement (1) comporte un distributeur de puissance (5) pour distribuer la puissance électrique d'au moins une source d'énergie régénérative (6) au circuit de refroidissement électrique du dispositif de refroidissement (1) et à au moins un autre consommateur électrique (7 ), et
le distributeur de puissance (5) a au moins une entrée de puissance (8), une première sortie de puissance (9) et au moins une deuxième sortie de puissance (10), où l'au moins une entrée de puissance (8) peut être connectée à l'au moins une source d'énergie régénérative (6), et où la première sortie d'énergie (9) est conçue comme un raccord de dispositif de refroidissement (11) pour relier le circuit de refroidissement électrique du dispositif de refroidissement (1), et l'au moins une deuxième sortie d'énergie (10) est un connecteur de consommateur électrique (12) pour connecter l'au moins un autre consommateur électrique (7),
où
le dispositif se passe de la présence d'une batterie supplémentaire pour amortir les pics de charge sans réduire la sécurité d'approvisionnement du dispositif de refroidissement avec une puissance électrique suffisante ;
**caractérisé en ce que**
le distributeur de puissance (5) comporte un système de commande avec une unité de calcul (23), une mémoire (24) et une logique de priorité, où la logique de priorité, en cas de manque de puissance électrique provenant de l'au moins une source d'énergie régénérative (6), alimente préférablement le circuit de refroidissement électrique du dispositif de refroidissement (1) en électricité ; et
le distributeur de puissance (5) déconnecte l'au moins un autre consommateur électrique (7) de l'au moins une source d'énergie régénérative (6) dès que la puissance électrique produite par l'au moins une source d'énergie régénératrice (6) descend en-dessous de la consommation de puissance du dispositif de refroidissement (1) et de l'au moins un autre consommateur électrique (7).

2. Dispositif de refroidissement (1) selon la revendication 1
**caractérisé en ce que**
l'au moins une source d'énergie régénérative (6) est un capteur solaire (15) ou un générateur éolien (16).

3. Dispositif de refroidissement (1) selon la revendication 1 ou 2
**caractérisé en ce que**
le distributeur de puissance (5) a au moins un premier capteur (13) pour déterminer une consommation de puissance du circuit de refroidissement électrique du dispositif de refroidissement (1).

4. Dispositif de refroidissement (1) selon l'une des revendications précédentes
**caractérisé en ce que**
le distributeur de puissance (5) comporte au moins un deuxième capteur (14) pour déterminer une densité d'énergie disponible.

5. Dispositif de refroidissement (1) selon l'une des revendications précédentes
**caractérisé en ce que**
le distributeur de puissance (5) relie l'au moins autre consommateur électrique (7) à l'au moins une source d'énergie régénérative (6) dès que la puissance électrique produite par l'au moins une source d'énergie régénérative (6) dépasse la consommation de puissance du circuit de refroidissement électrique du dispositif de refroidissement (1) et de l'au moins un autre consommateur électrique (7).

6. Dispositif de refroidissement (1) selon la revendication 5,
**caractérisé en ce que**
dans le cas de l'opération de plusieurs autres consommateurs électriques (7), le distributeur de puissance (5) se déconnecte ou se connecte à l'au moins une source d'énergie régénérative (6) en fonction de la consommation de puissance des autres consommateurs électriques respectifs ( 7).

7. Dispositif de refroidissement (1) selon l'une des revendications précédentes,
**caractérisé en ce que**
le distributeur de puissance (5) alimente en électricité l'au moins un autre consommateur électrique (7) lorsque le circuit de refroidissement électrique du dispositif de refroidissement (1) ne consomme pas de puissance électrique.

8. Dispositif de refroidissement (1) selon l'une des revendications précédentes
**caractérisé en ce que**
le connecteur de consommateur électrique (12) est un dispositif de chargement pour un consommateur fonctionnant sur batterie, en particulier une lampe (18) et/ou un ordinateur (18) et/ou un téléphone (19), ou pour une batterie rechargeable elle-même.

9. Dispositif de refroidissement (1) selon l'une des revendications précédentes **caractérisé en ce que** le dispositif de refroidissement (1) est adapté pour refroidir des produits médicaux, tels que par exemple des vaccins, des réserves de sang ou tout autre type de produits sanguins.

10. Dispositif de refroidissement (1) selon l'une des revendications précédentes **caractérisé en ce que** le distributeur de puissance (5) a une seule entrée de puissance (8) et dans lequel la seule entrée de puissance (8) peut être connectée à l'au moins une source d'énergie régénérative (6).

11. Procédé pour l'opération d'un dispositif de refroidissement (1) selon la revendication 3 ou selon l'une des revendications 4 à 10 dans la mesure où celles-ci dépendent de la revendication 3, avec les étapes de procédé suivantes :
a) une première détermination (P₁) de la consommation de puissance du circuit de refroidissement électrique du dispositif de refroidissement (1) par le premier capteur (13) avant de connecter l'au moins un autre consommateur électrique (7) à l'au moins une source d'énergie régénérative (6);
b) stockage de la première détermination (P₁) dans la mémoire (24) du système de commande ;
c) connexion de l'au moins un autre consommateur électrique (7) à l' au moins une source d'énergie régénérative (6) ;
d) une deuxième détermination (P₂) de la consommation de puissance du circuit de refroidissement électrique du dispositif de refroidissement (1) par le premier capteur (13) après avoir connecté l'au moins un autre consommateur électrique (7) à l'au moins une source d'énergie régénérative (6);
e) comparaison de la première détermination (P₁) à la deuxième détermination (P₂) dans l'unité de calcul ;
f) déconnection de l'au moins un autre consommateur de puissance (7) de l'au moins une source d'énergie régénérative (6) si la consommation de puissance de la deuxième détermination (P₂) est inférieure à la consommation de puissance de la première détermination (P₁) ;
g) répétition périodique des étapes du processus a) à f).

12. Procédé pour l'opération d'un dispositif de refroidissement (1) selon la revendication 4 ou selon l'une des revendications 5 à 10 dans la mesure où celles-ci dépendent de la revendication 4, avec les étapes de procédé suivantes :
a) entrée de la consommation électrique maximale (Pₘₐₓ₍₁₎) du circuit de refroidissement électrique du dispositif de refroidissement (1), entrée des caractéristiques de puissance (Pₘₐₓ₍₆₎) de la source d'énergie régénérative (6) et entrée de la puissance maximale de consommation (Pₘₐₓ₍₇₎) de l'au moins un autre consommateur électrique (7) dans la mémoire (24) du système de commande ;
b) détermination de la densité de la puissance disponible (Q) par le deuxième capteur (14) ;
c) calcul de la puissance disponible (Pᵢₛₜ) de la source d'énergie régénérative (6) dans l'unité de calcul (23) du système de commande sur la base des caractéristiques de performance (Pₘₐₓ₍₆₎) de la source d'énergie régénérative (6) et de la densité de l'énergie disponible (Q) ;
d) connexion de l'au moins un autre consommateur électrique (7) à l'au moins une source d'énergie régénérative (6) si la puissance disponible (Pᵢₛₜ) de la source d'énergie régénératrice (6) est supérieure ou égale à la somme de la consommation de puissance maximale du circuit de refroidissement électrique (1) et de la consommation de puissance maximale de l'au moins un autre consommateur électrique (7) ;
e) déconnexion de l'au moins un autre consommateur électrique (7) de l'au moins une source d'énergie régénérative (6) si la puissance disponible (Pᵢₛₜ) de la source d'énergie régénératrice (6) est inférieure à la somme de la consommation de puissance maximale du circuit de refroidissement électrique du dispositif de refroidissement (1) et de la consommation de puissance maximale de l'au moins un autre consommateur électrique (7) ;
f) répétition périodique des étapes du processus b) à e).

13. Procédé pour l'opération d'un dispositif de refroidissement (1) selon la revendication 3 ou selon l'une des revendications 4 à 10 dans la mesure où celles-ci dépendent de la revendication 3, avec les étapes de procédé suivantes :
a) entrée de la tension de fonctionnement/tension nominale (U_{Btr}) dans la mémoire (24) ;
b) une première mesure de tension (U₁) de la tension d'alimentation appliquée au dispositif de refroidissement (1) par le premier capteur (13) ;
c) stockage de la valeur de la première mesure de tension (U₁) dans la mémoire (24) du système de commande ;
d) comparaison de la tension de fonctionnement /tension nominale (U_{Btr}) avec la valeur de la première mesure de tension (U₁) dans le système de commande : si la valeur de la première mesure de tension (U₁) est inférieure à la tension de fonctionnement /tension nominale (U_{Btr}), on continue à l'étape b), sinon on continue à l'étape e) ;
e) connexion de l'au moins un autre consommateur électrique (7) à l'au moins une source d'énergie régénérative (6) ;
f) une deuxième mesure de tension (U₂) de la tension d'alimentation appliquée au dispositif de refroidissement (1) par le premier capteur (13) après avoir connecté l'au moins un autre consommateur électrique (7) à l'au moins une source d'énergie régénérative (6);
g) comparaison de la tension de fonctionnement /tension nominale (U_{Btr}) avec la valeur de la deuxième mesure de tension (U₂) dans le système de commande : si la valeur de la deuxième mesure de tension (U₂) est supérieure ou égale à la tension de fonctionnement /tension nominale (U_{Btr}), on continue à l'étape f), sinon on continue à l'étape h);
h) déconnexion de l'au moins un autre consommateur électrique (7) de l'au moins une source d'énergie régénérative (6) si la tension de fonctionnement/tension nominale (U_{Btr}) est supérieure à la valeur de la deuxième mesure de tension (U₂) ;
i) répétition périodique des étapes b) à h).
